# EUROPEAN PATENT SPECIFICATION

(11) **EP 1 936 043 B1**
(45) Date of publication and mention of the grant of the patent: **21.09.2011**
(21) Application number: 07013185.9
(22) Date of filing: 05.07.2007
(51) Int. Cl.: E02F 9/00, B60R 3/00

(54) **Foldable handrail for heavy construction equipment**
Faltbarer Handlauf für eine schwere Baumaschine
Main-courante pliable pour machine de construction lourde

(30) Priority: 24.11.2006 KR 20060116896
(43) Date of publication of application: 25.06.2008
(73) Proprietor: Volvo Construction Equipment Holding Sweden AB, 631 85 Eskilstuna (SE)
(72) Inventor: Kang, Hyun Seok, Seo-gu Busan (KR)
(74) Representative: Schmidt, Sven Hendrik

(56) References cited:
- JP-A- 11 165 982
- JP-A- 2003 119 825
- JP-A- 2004 044 122
- JP-A- 2006 036 129
- JP-A- 2006 290 030
- JP-A- 2006 312 847
- US-A- 5 996 737

## Description

### BACKGROUND OF THE INVENTION

### 1. Field of the Invention

The present invention relates to a foldable handrail for heavy construction equipment, and in particular to a foldable handrail for heavy construction equipment in which a certain structure of heavy construction equipment such as a handrail among many elements, which receives lots of vibrations, is improved for reducing vibrations transferred thereto.

### 2. Description of the Background Art

Such handrails of which both ends are stably fixed at a side surface of a heavy constructions equipment, having a first section part of which one end is fixed at a front end side surface and a second section part of which one end is up right and fixed at an upper surface of the side surface are known from the following:
JP 2003 119625 A1
JP 2006 312847 A
JP 2004 044122 A.

Generally, heavy construction equipment is used in a place where lots of vibrations and loads occur owing to its work environment. Since lots of loads and vibrations occur from a work device, engine, etc. of heavy construction equipment, each element of equipment receives lots of mechanical loads as well.

In particular, the elements of heavy construction equipment, which receive lots of vibrations and loads, may be sometime broken due to mechanical fatigue caused by means of vibrations and loads transferred thereto. So, when the elements of heavy construction equipment are designed in the course of manufacture, a mechanical durability is considered as the most important factor with respect to vibrations and loads.

Since the structure such as a handrail and the like among many elements of heavy construction equipment is basically designed to protect a driver as well as workers, such structure should be made in consideration with substantial durability. The handrail for an excavator is directly connected with an upper swing structure of excavator and main body of construction equipment. In the course of work, when a worker needs a repair or maintenance, the worker mounts onto an upper swing structure and body using the handrail and performs a needed work thereon. At this time, the handrail is used as a safety device for preventing a falling accident of the worker. The standards on the height and loads for the safety are stipulated in the ISO/FDI2867(standards on load and height of handrail).

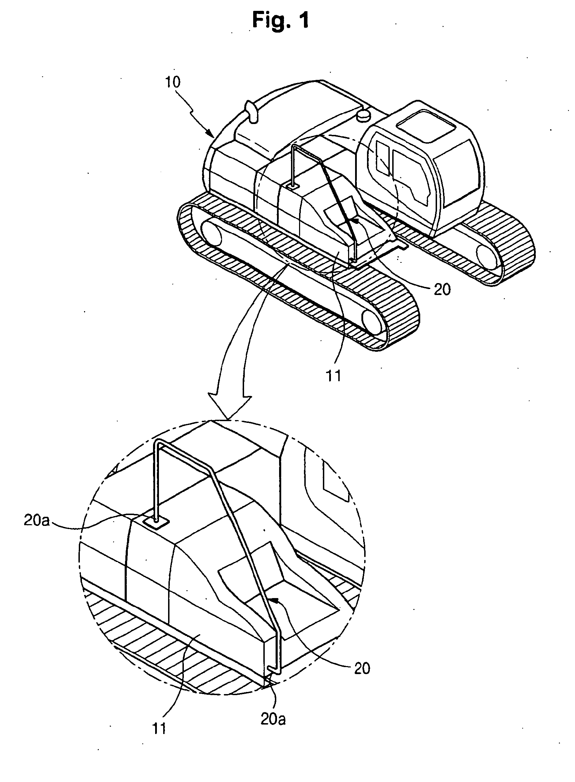

Figure 1 is an enlarged view illustrating a construction of a handrail installed at conventional heavy construction equipment, namely, at an excavator. Generally, a handrail 20 is vertically installed at a front side surface 11 of an upper swing body 10. In the above construction, lots of vibrations and loads are transferred to the handrail 20 while the excavator 20 works. The elements, which receive mechanical fatigue owing to lots of vibrations and loads, may be broken. The conventional handrail 20 has a problem that it receives lots of vibrations and loads in the course of work of heavy construction equipment.

When vibrations and loads are transferred from work device to the fixing portions 20a of both ends of the handrail 20 fixed at the side surface 21, the conventional handrail 20 operates along with the frequency of external forces. When the above phenomenon continues, the vibrations of the handrail 20 are more amplified, so that the fixing portions 20a of the handrail 20 directly receive lots of vibrations and loads. As a result, the handrail 20 may be broken and cracked.

### SUMMARY OF THE INVENTION

Accordingly, it is an object of the present invention to provide an improved handrail for heavy construction equipment which has a reliable durability with respect to vibrations and loads in the course of work of heavy construction equipment by improving the structure of a handrail which is able to significantly reduce the vibrations and loads directly transferred to the handrail in the course of work of heavy construction equipment.

To achieve the above objects, there is provided a handrail according to all the technical features, in combination, of claim 1. Said handrail of which both ends are stably fixable at a side surface of heavy construction equipment such as an excavator, etc., is a foldable handrail for heavy construction equipment. It comprises a first section part of which one end is fixable at a front end of the side surface; a second section part of which one end is upright and fixable at an upper surface of the side surface; and a third section part of which both ends are foldable with respect to the other end of each of the first and second section parts.

There is further provided a support member provided at the side surface for supporting the third section part in a folded state. The support member is provided at multiple points of the side surface. The hook is made of a certain material having an elastic force and flexing function and a smooth and durable feature.

The first and third section parts are engaged using a universal joint, so that the third section part is freely rotatable with respect to the first section part. The second and third section parts are engaged using a joint which rotates at an angle of 90°, so that the third section part is folded at an angle of 90° with respect to the second section part.

### BRIEF DESCRIPTION OF THE DRAWINGS

The present invention will become better understood with reference to the accompanying drawings which are given only by way of illustration and thus are not limitative of the present invention, wherein;
Figure 1 is a perspective view illustrating a handrail installed at conventional heavy construction equipment;
Figure 2 is a view illustrating a use state of a handrail installed at heavy construction equipment according to an embodiment of the present invention; and
Figure 3 is a partially enlarged view illustrating a connection state and a support method of a foldable handrail for heavy construction equipment according to an embodiment of the present invention.

### DETAILED DESCRIPTION OF THE PREFERRED EMBODIMENTS

The preferred embodiments of the present invention will be described with reference to the accompanying drawings.

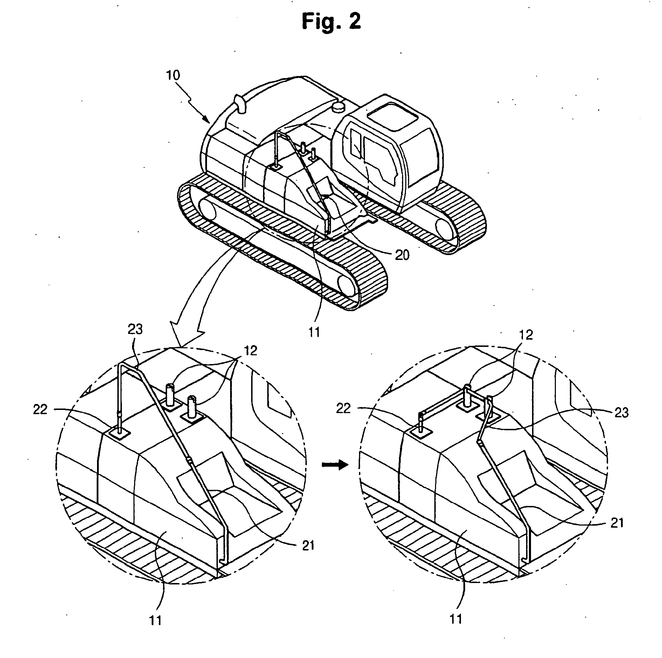

Figure 2 is a view illustrating a use state of a handrail installed at heavy construction equipment according to an embodiment of the present invention. The present invention is not limited to an excavator, which will be described as an example of the present invention. It is obvious to a person skilled in the art that the present invention may be applied to heavy construction equipment which uses a handrail.

As shown in Figure 2, there is provided a handrail 20 of which both ends are stably fixed at a side surface 11 of an upper swing body 10 of an excavator.

The handrail comprises a first section part 21 of which one end is fixed at a front side of the side surface 11, a second section part 22 of which one end is upright and fixed at the upper surface of the side surface 11, and a third section part 23 of which both ends are jointed with the first section part 21 and the second section part 22. Here, the first, second and third section parts 21, 22 and 23 are formed in a foldable structure.

As shown in the left and right sides of Figure 2, the handrail 20 is folded. Namely, the third section part 23 rotates with respect to the first and second section parts 21 and 22 and is folded. A support member 12 is provided at a side surface 11 of the body 10 for supporting the folded third section part 23.

The handrail 20 is folded as the third section part 23 is folded with respect to the first and second section parts 21 and 22. The support member 12 fixes the third section part 23 in the folding direction.

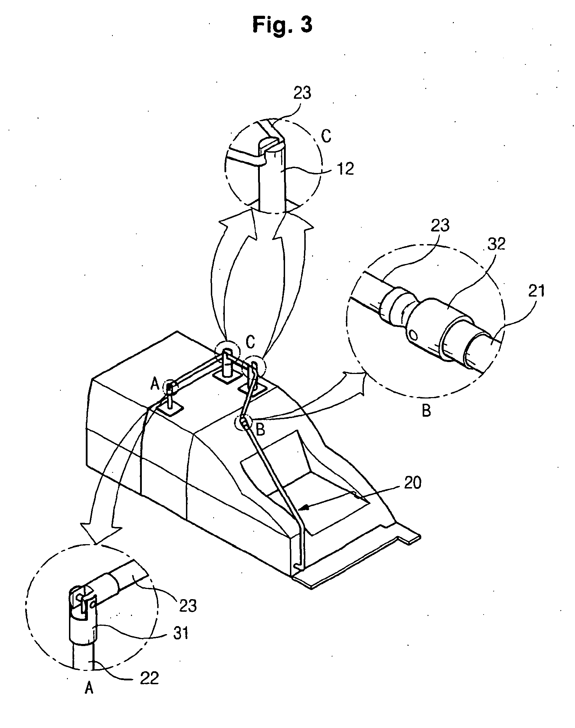

Figure 3 is a partially enlarged view illustrating a connection state and a support method of a foldable handrail for heavy construction equipment according to an embodiment of the present invention. In the drawings, reference characters A and B are joint connection parts.

In the case of the character A, the third section part 23 is folded at an angle of 90° with respect to the second section part 23 using a 90° angle joint 31 which rotates at an angle of 90° in one direction, and in case of the character B, the first and third section parts 22 and 23 are implemented using a freely rotatable universal joint 32, so that a foldable handrail 20 can be manufactured.

In the drawing, reference character C is a support member 12 for supporting the folded third section part 23. According to the situation given, the above support member may be provided at one point or multiple points. The support member 12 is formed in a hook shape, so that the third section part 23 may be properly hooked. The above hook is designed to have a flexing function and is preferably manufactured using a rubber material for easier engagement and disengagement. In addition, the above hook is preferably made of a certain material having a good flexing function and a reliable durability.

As the third section part 23 of the foldable handrail 20 is further supported by means of the support member 12, the handrail 20 is supported by means of multiple members for thereby significantly enhancing the stability of the handrail 20.

As the third section part 23 of the foldable handrail 20 is inserted into the support member 12, the vibrations of the handrail 20 can be significantly reduced with the help of elastic and flexing functions of the support member 12. In addition, In the course of work, the handrail 20 may get closer to the upper swing body in a lain-down shape and may be inserted into the hook-shaped fixture, so that it is possible to obtain the same effects as a construction that multiple flexible members are provided at a longitudinal structure at regular intervals. Since the non-continuous sections of loads are formed at the intermediate portions of the structure, the vibrations and loads occurring from the fixing part of the handrail are not transferred to the whole portions of handrail. In the course of work, as the third section part 23 of the handrail is fixed in a folded shape, the vibrations and loads can be significantly reduced.

In the present invention, the vibrations transferred to the handrail in the course of work can be significantly reduced, so that the durability of the handrail can be extended with respect to the vibrations. Since the driver is well aware of the safety with the present invention, it is possible to provide a driver of heavy construction equipment and workers with safe work environments.

As described above, when it is needed to work on the upper swing structure of heavy construction equipment, the folded handrail is unfolded, and a worker mounts on the upper swing structure using the handrail and does a needed work. After the work is finished, the handrail is folded and stored. The present invention allows a worker to be well aware of safety and is able to significantly reduce the vibrations transferred to the handrail, so that it is possible to obtain a worker's safety and durability enhancement with respect to vibrations.

As the present invention may be embodied in several forms without departing from the essential characteristics thereof, it should also be understood that the above-described examples are not limited by any of the details of the foregoing description, unless otherwise specified, but rather should be construed broadly within its scope as defined in the appended claims, and therefore all changes and modifications that fall within the meets and bounds of the claims, or equivalences of such meets and bounds are therefore intended to be embraced by the appended claims.

## Claims

1. A handrail (20) of which both ends are stably fixable at a side surface (11) of heavy construction equipment, comprising:
a first section part (21) of which one end is fixable at a front end of the side surface (11);
a second section part (22) of which one end is upright and fixable at an upper surface of the side surface (11); **characterized in that**:
the handrail (20) is a foldable handrail, which handrail also comprises a third section part (23) of which both ends are foldable with respect to the other end of each of said first and second section parts (21, 22).

2. The handrail of claim 1, further comprising a support member (12) provided at the side surface for supporting the third section part (23) in a folded state.

3. The handrail of claim 2, wherein said support member (12) is provided at multiple supporting points of the side surface (11).

4. The handrail of either claim 2 or claim 3, wherein said support member (12) is formed in a hook shape in which the third section part (23) is inserted and fixed.

5. The handrail of claim 4, wherein said hook is made of a certain material having an elastic force and flexing function and a smooth and durable feature.

6. The handrail of claim 1, wherein said first and third section parts (21, 23) are engaged using a universal joint (32), so that the third section part (23) is freely rotatable with respect to the first section part (21).

7. The handrail of claim 1, wherein said second and third section parts (22, 23) are engaged using a joint which rotates at an angle of 90°, so that the third section part (23) is folded at an angle of 90° with respect to the second section part (22).

## Patentansprüche

1. Handlauf (20), dessen beide Enden an einer Seitenfläche (11) einer schweren Baumaschine stabil fixierbar sind, umfassend:
einen ersten Teilabschnitt (21), dessen ein Ende an einem vorderen Ende der Seitenfläche (11) fixierbar ist;
einen zweiten Teilabschnitt (22), dessen ein Ende senkrecht und an einer oberen Fläche der Seitenfläche (11) fixierbar ist;
**dadurch gekennzeichnet, dass** der Handlauf (20) ein klappbarer Handlauf ist,
welcher Handlauf auch einen dritten Teilabschnitt (23) umfasst, dessen beide Enden gegenüber dem anderen Ende jedes der genannten ersten und zweiten Teilabschnitte (21, 22) klappbar sind.

2. Handlauf nach Anspruch 1, ferner umfassend ein Stützelement (12), das zur Abstützung des dritten Teilabschnitts (23) in einem geklappten Zustand an der Seitenfläche vorgesehen ist.

3. Handlauf nach Anspruch 2, wobei das gesagte Stützelement (12) an zahlreichen Stützstellen der Seitenfläche (11) vorgesehen ist.

4. Handlauf nach Anspruch 2 oder Anspruch 3, wobei das gesagte Stützelement (12) hakenförmig ist, in welchem der dritte Teilabschnitt (23) eingelegt und befestigt ist.

5. Handlauf nach Anspruch 4, wobei der gesagte Haken aus einem bestimmten Material hergestellt ist, das eine Federkraft-und Biegefunktion und eine glatte und haltbare Eigenschaft aufweist.

6. Handlauf nach Anspruch 1, wobei der gesagte erste und der gesagte dritte Teilabschnitt (21, 23) mittels eines Kreuzgelenks (32) in Eingriff stehen, sodass der dritte Teilabschnitt (23) gegenüber dem ersten Teilabschnitt (21) frei drehbar ist.

7. Handlauf nach Anspruch 1, wobei der gesagte zweite und der gesagte dritte Teilabschnitt (22, 23) mit Hilfe eines Gelenks in Eingriff stehen, das mit einem Winkel von 90° rotiert, sodass der dritte Teilabschnitt (23) gegenüber dem zweiten Teilabschnitt (22) mit einem Winkel von 90° geklappt wird.

## Revendications

1. Rampe (20), dont les deux extrémités peuvent être fixées de manière stable au niveau d'une face latérale (11) d'un gros équipement de construction, comprenant:
une première partie (21), dont une extrémité peut être fixée au niveau d'une extrémité avant de la face latérale (11);
une deuxième partie (22), dont une extrémité est verticale et peut être fixée au niveau d'une extrémité supérieure de la face latérale (11);
**caractérisée en ce que** la rampe (20) est une rampe pliante, laquelle rampe comporte également une troisième partie (23), dont les deux extrémités sont pliantes par rapport à l'autre extrémité de chacune desdites première et deuxième parties (21, 22).

2. Rampe selon la revendication 1, comportant de plus un élément d'appui (12), qui est aménagé au niveau de la face latérale pour soutenir la troisième partie (23) une fois repliée.

3. Rampe selon la revendication 2, dans laquelle ledit élément d'appui (12) est prévu en de multiples points d'appui de la face latérale (11).

4. Rampe selon la revendication 2 ou la revendication 3, dans laquelle ledit élément d'appui (12) est en forme de crochet dans lequel la troisième partie (23) est introduite et fixée.

5. Rampe selon la revendication 4, où ledit crochet se compose d'un certain matériau présentant une fonction de résilience et flexion de même qu'un caractère lisse et durable.

6. Rampe selon la revendication 1, où lesdites première et troisième parties (21, 23) sont engrenées par le biais d'un joint universel (32) de sorte que la troisième partie (23) peut tourner librement par rapport à la première partie (21).

7. Rampe selon la revendication 1, où lesdites deuxième et troisième parties (22, 23) sont engrenées à l'aide d'un joint tournant à un angle de 90° de sorte que la troisième partie (23) est repliée à un angle de 90° par rapport à la deuxième partie (22).
